Europäisches Patentamt

European Patent Office

Office européen des brevets

(19)

(11)  **EP 1 372 019 A1**

(12)  # DEMANDE DE BREVET EUROPEEN

(43) Date de publication:
**17.12.2003  Bulletin 2003/51**

(51) Int Cl.$^7$: **G02C 7/02**

(21) Numéro de dépôt: **02291477.4**

(22) Date de dépôt: **13.06.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(71) Demandeur: **Baechele, Fréderic
74500 Amphion les Bains (FR)**

(72) Inventeur: **Baechele, Fréderic
74500 Amphion les Bains (FR)**

(74) Mandataire: **Sauvage, Renée
Cabinet Sauvage
65, Boulevard Soult
75012 Paris (FR)**

(54)  **Verres scléraux**

(57)   Les verres de la collection comportent, d'une manière connue en soi, un rayon optique Ro, une zone cornéenne (Zc) ayant une flèche (F), une zone de transition (Zt) et une zone haptique (Zs) ayant un rayon scléral et une périphérie libre dont le diamètre correspond au diamètre total (Øt).

Pour tous les verres de la collection, le diamètre cornéen (Ø2) est de 14 mm $\pm$ 1 mm et le diamètre total (Øt) est de 19 mm $\pm$ 4 mm. La flèche cornéenne (F) varie de 15/100 mm en 15/100 mm $\pm$ 5/100 mm d'un verre à l'autre dans la collection.

*FIG 2*

EP 1 372 019 A1

## Description

La présente invention concerne, d'une manière générale les verres scléraux, leur adaptation et leur fabrication.

Un verre scléral est un type de lentille de contact de très grand diamètre puisque, comme son nom l'indique, il affecte la plus grande partie de la sclère. Si ce type de verres est connu depuis la fin du 19 ème siècle, il est peu prescrit malgré le fait qu'il soit, le plus souvent, le seul type de moyen susceptible de corriger la vision de patients ayant de graves anomalies de la cornée.

La faiblesse des prescriptions a une double raison :

- une réticence des praticiens à l'égard de verres très couvrants, faisant obstacle à un libre échange entre les tissus et l'oxygène de l'air ; et
- une adaptation nettement plus difficile que celle des lentilles de contact, en raison de la géométrie plus complexe à prendre en compte et, le cas échéant, de l'absence de fiabilité des mesures des rayons de courbure cornéens en raison de déformations cornéennes très importantes.

En ce qui concerne la question des échanges gazeux entre tissus et oxygène ambiant, la réticence des prescripteurs est de moins en moins justifiée compte tenu du développement de matériaux de plus en plus perméables à l'oxygène utilisables pour la fabrication des verres scléraux.

Par contre, il demeure le problème de l'adaptation. A ce jour, en effet, l'adaptation des verres scléraux implique soit la prise d'une empreinte de l'oeil et le moulage du verre à partir de l'empreinte, ce qui est une opération délicate et peu plaisante pour le patient, soit l'utilisation de verres fabriqués à partir de mesures et d'essais, sans prise d'empreinte. Cependant, dans ce dernier cas, l'opération demande un excellent savoir-faire de l'opérateur qui doit être capable d'interpréter la variation sur l'oeil d'un ou plusieurs des nombreux paramètres intervenant dans la géométrie du verre (rayon de courbure et diamètre de la zone optique, rayon(s) de courbure et diamètre(s) de la zone de transition, diamètre de la transition, rayon de courbure de la partie sclérale, diamètre total du verre, puissance optique). Or, les prescriptions de verres scléraux étant peu nombreuses, seuls des spécialistes peuvent posséder ce savoir-faire. On est donc en présence d'un cercle vicieux : les praticiens prescrivent peu en raison de la difficulté à trouver un adaptateur expérimenté qui réussira l'adaptation, et il y a peu d'adaptateurs expérimentés du fait qu'il y a peu de prescriptions...

La présente invention a pour but de remédier à cette situation en facilitant l'adaptation par utilisation d'une collection de verres scléraux qui comportent, d'une manière connue en soi, un rayon optique Ro, une zone cornéenne ayant une flèche, une zone de transition et une zone haptique ayant un rayon scléral et une périphérie libre dont le diamètre correspond au diamètre total du verre.

Selon l'invention, pour tous les verres de la collection, le diamètre cornéen est de 14 mm ± 1 mm, le diamètre total est de 19 mm ± 4 mm, de préférence de 19 mm ± 1 mm et la flèche cornéenne varie de 15/100 mm en 15/100 mm ± 5/100 mm, et de préférence de 20/100 mm en 20/100 mm, d'un verre à l'autre dans ladite collection.

Il a en effet été déterminé qu'un tel diamètre cornéen et un tel diamètre total convenaient à l'ensemble des patients.

Il a également été déterminé qu'un rayon scléral compris entre 13,00 et 15,50 mm convenait à l'ensemble des patients, la valeur de ce paramètre et celle de la flèche suffisant pour concevoir un verre scléral adapté à chaque cas particulier.

Ainsi, la collection selon l'invention comprendra généralement trois sous-collections :

- une dans laquelle le rayon scléral est de 13,50 mm ± 1 mm pour tous les verres ;
- une dans laquelle le rayon scléral est de 14,00 mm ± 1 mm pour tous les verres ; et
- une dans laquelle le rayon scléral est de 15,00 mm ± 1 mm pour tous les verres.

Dans une forme d'exécution préférée de l'invention, la zone de transition des verres de la collection est définie par une série de rayons de courbure (R1, R2, R3) liés audit rayon optique (Ro) par une relation fixe et, de préférence, cette relation fixe est la suivante :

$$R1 = Ro + 1,50 \text{ mm}$$
$$R2 = R1 + 1,50 \text{ mm}$$
$$R3 = R2 + 1,00 \text{ mm}.$$

En variante et avantageusement, la zone de transition des verres de la collection a une surface asphérique continue.

L'invention étend sa portée à tout verre scléral ayant une géométrie conforme à celle de l'un quelconque des verres d'une collection définie ci-dessus.

L'invention sera mieux comprise à la lecture de la description suivante faite en référence aux figures annexées dans lesquelles :

- la figure 1 représente schématiquement la partie de l'oeil concernée par l'adaptation d'un verre scléral, et
- la figure 2 est une demi-coupe d'un verre scléral selon l'invention, l'axe de symétrie étant indiqué en x-x'.

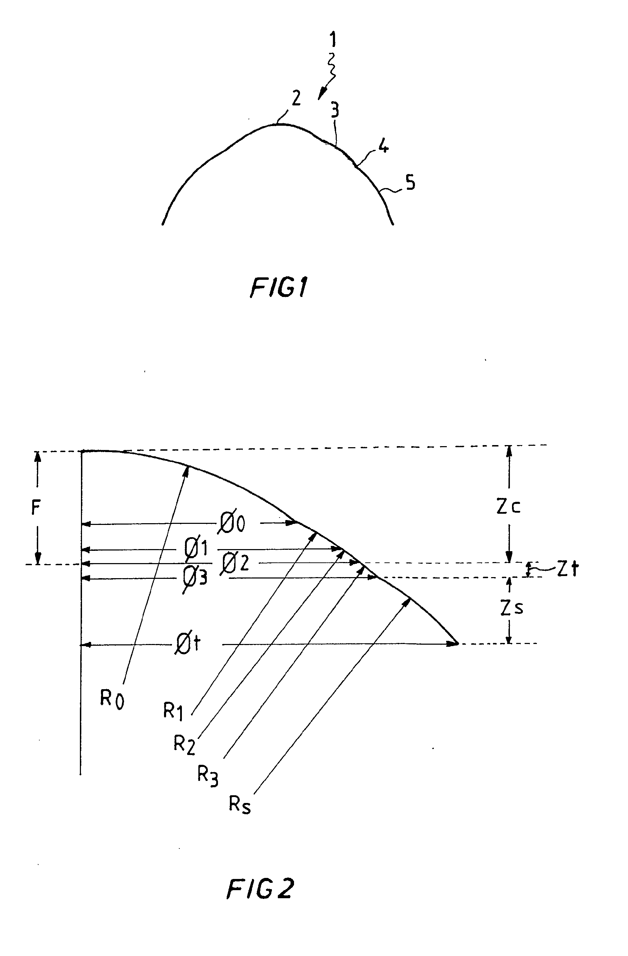

Sur la figure 1, on voit en 1 la cornée qui présente une zone centrale régulière 2 de quelques millimètres de diamètre et une zone périphérique 3 qui s'aplatit progressivement jusqu'au limbe 4. Au delà du limbe, on trouve la sclère 5.

Un verre scléral comporte classiquement trois parties internes, à savoir :

- une zone haptique ou sclérale Zs qui s'appuie sur la sclère,
- une zone cornéenne Zc qui dégage la cornée, et
- entre les zones Zs et Zc, une zone de transition Zt dont la raison d'être est d'éviter une pression du verre sur le limbe et sur la conjonctive périlimbique où arrivent les vaisseaux sanguins irriguant les tissus.

Ces zones sont indiquées à la figure 2.

Sur cette figure 2 sont en outre indiqués :

- le rayon Ro, dit rayon optique, qui donne sa courbure de la zone cornéenne Zc correspondant à la partie centrale de la cornée :
- des rayons R1 et R2, tels que

$$R1 = Ro + 1,50 \text{ mm}$$

$$R2 = R1 + 1,50 \text{ mm}$$

qui donnent l'aplatissement de la zone cornéenne correspondant à la partie périphérique de la cornée,
- un rayon R3, tel que

$$R3 = R2 + 1,00 \text{ mm}$$

qui donne sa courbure à la zone de transition Zt, et
- le rayon scléral Rs.

On notera qu'il n'est pas impératif de passer par pas de Ro à R1, de R1 à R2, et de R2 à R3, comme indiqué ci-dessus : si l'on dispose d'un tour permettant de passer progressivement de Ro à R3 sans à-coup, il va sans dire que le résultat ne pourra être que satisfaisant. Cependant, de tels tours, qui sont des outillages coûteux, ne sont pas absolument indispensables.

La figure 2 indique de plus les différents diamètres du verre scléral selon l'invention, dans des plans parallèles entre eux, orthogonaux à la feuille de dessins et à l'axe X-X'.

Ainsi, l'on voit :

- en Øo, le diamètre de la zone cornéenne au niveau de la transition entre la partie centrale de la zone cornéenne et la partie périphérique aplatie de la cornée ;
- en Ø1, le diamètre de la zone cornéenne au niveau de ladite partie périphérique de rayon de courbure R1,
- en Ø2, le diamètre de la zone cornéenne au niveau de ladite partie périphérique de rayon de courbure R2,
- en Ø3, le diamètre de la zone de transition Zt, et
- en Øt, le diamètre total du verre scléral au niveau de sa périphérie libre.

Enfin, la référence F indique la flèche cornéenne, c'est-à-dire la distance entre, d'une part, le point de la face interne du verre qui est dans l'axe de l'apex de la zone centrale de la cornée et, d'autre part, le plan de transition entre la cornée et le limbe.

Il a été constaté selon l'invention qu'un diamètre cornéen de 14 mm ± 1 mm, par exemple de 14 mm, et un diamètre total Øt de 19 mm ± 4 mm, de préférence de 19 mm ± 1 mm, par exemple de 19 mm, conviennent à tous les patients. Il a également été constaté, en ce qui concerne le rayon scléral Rs, que trois - ou même deux - valeurs disponibles sur la gamme de 13,00 mm à 15,50 mm suffisent pour que, de ce point de vue, tous les besoins soient également satisfaits.

L'invention prévoit donc de constituer autant de collections que de rayons scléraux, par exemple trois collections dont les verres ont respectivement un Rs de 13,50 mm, 14,00 mm et 14,75 mm, les verres desdites trois collections ayant tous un diamètre cornéen Ø2 de 14 mm et un diamètre total Øt de 19 mm. Exceptionnellement, on pourra prévoir une quatrième collection dont les verres auront un Rs de 15,50 mm.

Le seul paramètre variable, à l'intérieur d'une collection de même rayon scléral Rs, sera la flèche cornéenne F. D'un verre à l'autre, cette flèche variera de 15/100 mm en 15/100 mm ± 5/100 mm, et de préférence de 20/100 mm en 20/100 mm.

L'ensemble des collections de verres scléraux selon l'invention forme une boîte d'essai.

Pour procéder à une adaptation avec une boîte d'essai selon l'invention, on commence par poser sur l'oeil un verre de rayon scléral moyen (14 mm) et de flèche cornéenne moyenne (3,6087 mm).

On contrôle ensuite l'adéquation entre le rayon scléral et l'oeil du patient en examinant la vascularisation sclérale :

- si les vaisseaux sont comprimés, il faut choisir un rayon scléral plus plat (14,75 mm) en conservant la même valeur de flèche (3,6087 mm) ;
- si le verre scléral est instable sur l'oeil, avec un décollement à la fermeture palpébrale, il faut choisir un rayon scléral plus serré (13,50 mm) en conservant la même valeur de flèche (3,6087 mm).

Le rayon scléral étant déterminé, il faut se préoccuper de la forme à donner à la zone cornéenne et c'est là qu'intervient le choix de la flèche.

Pour ce faire, on examine si le verre scléral du Rs choisi et de flèche 3,6087 mm appuie sur la zone cornéenne centrale. Un tel appui est facilement observé en emplissant le verre d'une solution aqueuse à 0,9% de chlorure de sodium additionnée de fluorescéine, en le posant sur l'oeil et en observant sous lumière bleue (filtre cobalt) : les parties du verre qui ne sont pas en contact avec l'oeil prennent un aspect verdâtre. Ainsi,

- si l'on constate que le verre appuie dans la zone cornéenne centrale, il faut choisir le verre suivant dans la gradation croissante des flèches, soit 3,6087 mm + 0,20 mm = 3,8087 mm, et recommencer l'opération jusqu'à identifier le verre ayant la flèche convenable, c'est-à-dire un verre tel que la distance entre la partie centrale de la cornée et le verre soit de 15 à 20/100 mm, cette distance étant mesurée par observation, à la lampe à fente, du ménisque de solution de chlorure de sodium / fluorescéine ;
- si l'on constate qu'il n'a pas d'appui entre le verre scléral et la partie centrale de la cornée et que la distance entre eux est égale à 15-20/100 mm, le verre scléral essayé convient ;
- si l'on constate qu'il n'a pas d'appui entre le verre scléral et la partie centrale de la cornée et que la distance entre eux est supérieure à 15 à 20/100 mm, il faut choisir le verre suivant dans la gradation décroissante des flèches, soit 3,6087 mm - 0,20 mm = 3,4087 mm, et recommencer l'opération jusqu'à identifier le verre ayant la flèche convenable.

L'adaptation est terminée et, comme on le voit, elle est fort simple.

Pour la fabrication d'un verre scléral correspondant au verre scléral sélectionné de la boîte d'essai, on calcule facilement, par exemple au moyen d'un tableur informatique, Ro en fonction de la flèche F, ces valeurs étant liées, comme on le sait, par la relation :

$$F = Ro - [R2 - (\emptyset 2 * 1/2)^2]^{1/2}$$

ou

$$Ro = [(\emptyset 2 * 1/2)^2 + F^2] / 2F$$

Pour le reste, le rayon scléral Rs a été déterminé par l'essai, et les autres valeurs utiles sont soit fixes, comme indiqué plus haut (à savoir $\emptyset 2$ = 14 mm, $\emptyset t$ = 19 mm), soient liées par une relation fixe à la valeur calculée Ro (à savoir R1 = Ro + 1,50 mm, R2 = R1 + 1,50 mm et R3 = R2 + 1,00 mm) .

Le tour est réglé manuellement à partir de l'ensemble de ces paramètres et la face interne du verre scléral est usinée. On peut cependant concevoir que l'usinage de la face interne du verre scléral soit fait au moyen d'un tour directement asservi à un ordinateur dans lequel il suffit d'entrer les valeurs de F et Rs identifiées lors de l'adaptation.

Quant à la face extérieure, elle est usinée d'une manière connue en soi pour donner au verre scléral la puissance optique voulue.

Le matériau utilisé pour la fabrication du verre scléral sera, de préférence, un matériau flexible perméable à l'oxygène, tel qu'approuvé par la Food and Drug Administration pour le port journalier ou permanent. Il s'agira, par exemple, d'un polymère fluoré de Dk 100 au minimum.

Il ressort de la description qui précède que les moyens apportés par l'invention permettent un centrage du verre scléral indépendant des déformations cornéennes ainsi qu'un respect de la physiologie cornéenne. L'adaptation facilitée des verres scléraux devrait permettre de mieux exploiter les avantages de ces équipements qui constituent une barrière de protection vis-à-vis des paupières et du milieu extérieur, qui forment réservoir de larmes et qui sont de manipulation facile.

De tels verres scléraux seront indiqués :

- à des fins optiques, en cas de kératocônes, greffe de cornée, cicatrice cornéenne, dégénérescence pellucide, kératoglobe, amétropies fortes, astigmatismes forts et/ou irréguliers, ou lorsque le port de lentilles de contact n'est pas possible ou pose problème (en cas d'instabilité, de décentrement, d'appui important, d'intolérance ou de difficulté de manipulation, ou encore de pratique de sports aquatiques) ;
- à des fins de protection mécaniques, soit vis-à-vis des défauts palpébraux (trichiasis, cicatrices conjonctivales, conjonctivites ligneuses, syndrome de Steven-Johnson + pemphygoïde, prévention des symblépharons), soit vis-à-vis du milieu extérieur (poussières, climatisation) ; et
- à des fins thérapeutiques (oeil sec, brûlure, dégénérescence marginale de Terrien, kératopathie bulleuse).

**Revendications**

1. Collection de verres scléraux pour boîte d'essai, lesdits verres comportant un rayon optique Ro, une zone cornéenne (Zc) ayant une flèche (F), une zone de transition (Zt) et une zone haptique (Zs) ayant un rayon scléral et une périphérie libre dont le diamètre correspond au diamètre total ($\emptyset t$), **caractérisée en ce que**, pour tous les verres de la collection, le diamètre cornéen ($\emptyset 2$) est de 14 mm ± 1 mm et le diamètre total ($\emptyset t$) est de 19 mm ±4 mm et **en ce que** la flèche cornéenne (F) varie de 15/100 mm en 15/100 mm ± 5/100 mm d'un verre à l'autre dans ladite collection.

2. Collection selon la revendication 1, **caractérisée en ce que** la flèche cornéenne (F) varie de 20/100 mm en 20/100 mm d'un verre à l'autre dans ladite collection.

3.  Collection selon la revendication 1 ou 2, **caractérisée en ce que** ladite zone de transition (Zt) est définie par une série de rayons de courbure (R1, R2, R3) liés audit rayon optique (Ro) par une relation fixe.

4.  Collection selon la revendication 3, **caractérisée en ce que** trois rayons de courbure définissent ladite zone de transition (Zt) et **en ce que** ladite relation fixe est la suivante :

$$R1 = Ro +1{,}50 \text{ mm}$$

$$R2 = R1 + 1{,}50 \text{ mm}$$

$$R3 = R2 + 1{,}00 \text{ mm}.$$

5.  Collection selon la revendication 1 ou 2, **caractérisée en ce que** ladite zone de transition (Zt) a une surface asphérique continue.

6.  Collection selon l'une quelconque des revendications 1 à 5, **caractérisée en ce que** le rayon scléral (Rs) est compris entre 13,00 et 15,50 mm pour tous les verres de la collection.

7.  Collection selon l'une quelconque des revendications 1 à 5, **caractérisée en ce que** le rayon (Rs) scléral est de 13,50 mm ± 1 mm pour tous les verres de la collection.

8.  Collection selon l'une quelconque des revendications 1 à 5, **caractérisée en ce que** le rayon scléral (Rs) est de 14,00 mm ± 1 mm pour tous les verres de la collection.

9.  Collection selon l'une quelconque des revendications 1 à 5, **caractérisée en ce que** le rayon scléral (Rs) est de 14,75 mm ± 1 mm pour tous les verres de la collection.

10. Boîte d'essai composée de collections de verres scléraux selon l'une quelconque des revendications 1 à 6.

11. Boîte d'essai composée des collections de verres scléraux selon les revendications 7, 8 et 9 prises cumulativement.

12. Verre scierai ayant une géométrie conforme à celle de l'un quelconque des verres d'une collection selon l'une quelconque des revendications 1 à 9.

EP 1 372 019 A1

FIG1

FIG2

6

**Office européen des brevets**

## RAPPORT DE RECHERCHE EUROPEENNE

Numéro de la demande

EP 02 29 1477

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| E | FR 2 817 976 A (BAECHELE FREDERIC) 14 juin 2002 (2002-06-14) * le document en entier * --- | 1-12 | G02C7/02 |
| X | US 4 652 099 A (LICHTMAN WILLIAM M) 24 mars 1987 (1987-03-24) | 1-3,5,12 | |
| Y | * colonne 1, ligne 50; figure 4 * * colonne 24-43 * * revendications 1,4,12; figures 2-4 * --- | 6-11 | |
| X | WO 02 43622 A (FREUNDES UND FOERDERKREIS DES ;BERNDT ERIK (DE); ADEMOVIC ZAHIDA ()) 6 juin 2002 (2002-06-06) | 1-3,5,12 | |
| A | * page 8, ligne 1-12; figure 1 * --- | 6-11 | |
| Y | GB 634 178 A (SIDNEY SOLOMON SCRIVEN) 15 mars 1950 (1950-03-15) * page 2, colonne de droite, ligne 93-120 * --- | 6-9 | |
| Y | US 5 929 969 A (ROFFMAN JEFFREY H) 27 juillet 1999 (1999-07-27) * colonne 12, ligne 27-44 * * revendication 1 * --- | 10,11 | DOMAINES TECHNIQUES RECHERCHES (Int.Cl.7) G02C A61F |
| A | WO 87 00936 A (VOLK DAVID) 12 février 1987 (1987-02-12) * revendication 1 * --- | 4 | |
| A | US 3 482 906 A (VOLK DAVID) 9 décembre 1969 (1969-12-09) * revendications 5-7; figure 4 * ----- | 1,2 | |

Le présent rapport a été établi pour toutes les revendications

| Lieu de la recherche | Date d'achèvement de la recherche | Examinateur |
|---|---|---|
| BERLIN | 15 novembre 2002 | Fazio, V |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**   EP 02 29 1477

15-11-2002

| Document brevet cité au rapport de recherche | | | Date de publication | Membre(s) de la famille de brevet(s) | | Date de publication |
|---|---|---|---|---|---|---|
| FR 2817976 | A | | 14-06-2002 | FR | 2817976 A1 | 14-06-2002 |
| US 4652099 | A | | 24-03-1987 | AUCUN | | |
| WO 0243622 | A | | 06-06-2002 | AU | 2627602 A | 11-06-2002 |
| | | | | WO | 0243622 A1 | 06-06-2002 |
| GB 634178 | A | | 15-03-1950 | AUCUN | | |
| US 5929969 | A | | 27-07-1999 | AU | 717501 B2 | 30-03-2000 |
| | | | | AU | 5194996 A | 14-11-1996 |
| | | | | BR | 9602144 A | 30-06-1998 |
| | | | | CA | 2175651 A1 | 05-11-1996 |
| | | | | EP | 0742464 A2 | 13-11-1996 |
| | | | | JP | 9026559 A | 28-01-1997 |
| | | | | NO | 961807 A | 05-11-1996 |
| | | | | NZ | 286404 A | 26-02-1998 |
| | | | | SG | 48436 A1 | 17-04-1998 |
| | | | | ZA | 9603541 A | 03-11-1997 |
| WO 8700936 | A | | 12-02-1987 | WO | 8700936 A1 | 12-02-1987 |
| | | | | AU | 594308 B2 | 08-03-1990 |
| | | | | AU | 4721385 A | 05-03-1987 |
| | | | | EP | 0231174 A1 | 12-08-1987 |
| | | | | JP | 2057290 B | 04-12-1990 |
| | | | | JP | 63500403 T | 12-02-1988 |
| US 3482906 | A | | 09-12-1969 | DE | 1497626 B1 | 26-09-1974 |
| | | | | GB | 1156454 A | 25-06-1969 |
| | | | | JP | 49018266 B | 09-05-1974 |

EPO FORM P0460